# EUROPÄISCHE PATENTSCHRIFT

(11) **EP 2 551 091 B1**
(45) Veröffentlichungstag und Bekanntmachung des Hinweises auf die Patenterteilung: **18.06.2014**
(21) Anmeldenummer: 11175513.8
(22) Anmeldetag: 27.07.2011
(51) Int. Cl.: B29C 65/08, B29D 23/00, A01G 25/02

(54) **Verfahren zur Herstellung von Tropfbewässerungsrohren**
Method for manufacturing water drop tubes
Procédé de fabrication de tuyaux d'évacuation en goutte à goutte

(43) Veröffentlichungstag der Anmeldung: 30.01.2013
(73) Patentinhaber: THE Machines Yvonand SA, 1462 Yvonand (CH)
(72) Erfinder: Kertscher, Eberhard, 1462 Yvonand (CH); Lambert, Cédric, 2000 Neuchâtel (CH); Bersier, Romain, 1462 Yvonand (CH)
(74) Vertreter: Scheuzger, Beat Otto

(56) Entgegenhaltungen:
- US-A- 4 534 515
- US-A- 5 387 307
- US-A1- 2009 025 853

## Beschreibung

Die vorliegende Erfindung bezieht sich auf ein Verfahren zur Herstellung von Tropfbewässerungsrohren, bei welchen ein Körper, aus welchem das Rohr gebildet wird, extrudiert wird und im extrudierten Körper Dosierelemente angebracht werden, welche mit dem Körper durch Ultra-Schweissung verbunden werden, bei welchen Tropfbewässerungsrohren das Wasser aus deren Innenseite über Eintrittsöffnungen in die Dosierelemente gelangt, diese durchläuft und über Austrittsöffnungen dosiert aus dem Tropfbewässerungsrohren austritt.

Derartige mit Dosierelementen versehene Tropfbewässerungsrohre werden zur direkten Bewässerung von Pflanzen in Kulturen eingesetzt. Hierzu können die Tropfbewässerungsrohre so ausgestaltet sein, dass sich beispielsweise im Bereich jeder Pflanze eine Austrittsöffnung befindet, durch welche das Wasser aus dem Tropfbewässerungsrohr dosiert und tropfweise ausgelassen wird. Durch diese Einrichtung kann jede der einzelnen Pflanzen direkt bewässert werden und das Wasser kann dadurch sehr sparsam eingesetzt werden. Mit einer derartigen Anordnung wird vermieden, dass eine grosse Menge des Wassers zur Bewässerung verdunstet, wie dies üblicherweise bei Bewässerungsanlagen geschieht, bei welchen das Wasser grossflächig über Spritzanlagen verteilt wird. Mit der dosierten Bewässerung über diese Tropfbewässerungsrohre wird somit eine sehr wirtschaftliche Bewässerung erreicht und es kann viel Wasser gespart werden.

Es sind verschiedene Möglichkeiten zur Herstellung der Tropfbewässerungsrohre bekannt. Es ist beispielsweise bekannt, dass der Rohrkörper extrudiert und durch eine Kalibriereinrichtung geführt wird, und dass die Dosierelemente einzeln oder in Form eines Bandes kontinuierlich in den Rohrkörper eingeführt werden und an die innere Oberfläche der Wandung des Rohrkörpers angepresst werden, wodurch, da das Material des Rohrkörper noch weich und heiss ist, eine feste Verbindung erreicht wird.

Um eine optimalere Verbindung zwischen Rohrkörper und Dosierelementen erreichen können, ist auch bekannt, dass die Dosierelemente durch Ultraschallschweissung mit dem Rohrkörper verbunden werden. Aus dem Dokument US-A 5387307 ist beispielsweise ein Verfahren bekannt, bei welchem am einen Randbereich des Bandes die Dosierelemente eingeprägt werden. Die Randbereiche werden dann aufgestellt und übereinandergelegt, so dass der eine Randbereich mit den Dosierelementen auf den anderen Randbereich des Bandes zu liegen kommt. Die beiden Randbereiche werden dann über eine Ultraschallschweissanlage miteinander verbunden, so dass das Dosierelement in die Randbereiche eingebettet wird. Hierbei ist aber von Nachteil, dass der Amboss der Ultraschallschweisseinrichtung als Abstützung für die Sonotrode in den Rohrkörper hineinragen muss, wodurch der Amboss als freiauskragender Biegeträger ausgebildet sein muss. Dies bedeutet, dass der Amboss beim Schweissvorgang von der Sonotrode wegfedert, was sich negativ auf die Qualität der Schweissverbindung auswirken kann. Die derart hergestellten Rohre müssen auch einen bestimmten Durchmesser aufweisen, damit der Amboss eine genügend grosse Steifigkeit aufweisen kann, damit überhaupt das Schweissverfahren durchgeführt werden kann.

Die Aufgabe der vorliegenden Erfindung besteht somit darin, ein Verfahren zum Herstellen von Tropfbewässerungsrohren zu schaffen, mit welchem die Dosierelemente mittels Ultraschallschweissung mit der Wandung des Rohres verbunden werden können und bei welchem eine optimale Verbindungsqualität gewährleistet ist.

Erfindungsgemäss erfolgt die Lösung dieser Aufgabe dadurch, dass der Körper zu einem Rohrkörper gebildet wird, welcher flach gepresst wird und die Dosierelemente in einen mittleren Bereich im Inneren dieses flach gepressten Rohrkörpers zu liegen kommen, dass der flache Rohrkörper zwischen einer Sonotrode und einem Amboss einer Ultraschallschweisseinrichtung hindurchgeführt wird und die Dosierelemente mit der Wandung des Rohrkörpers verschweisst werden.

Mit diesem Verfahren wird ermöglicht, dass die Sonotrode und der Amboss der Ultraschallschweisseinrichtung ausserhalb des Rohrkörpers angeordnet werden können. Insbesondere der Amboss kann dadurch direkt und massiv in der Ultraschallschweissanlage abgestützt werden, so dass ein Wegfedern vermieden werden kann. Dadurch wird eine optimale Qualität der Ultraschallschweissverbindung gewährleistet. Es ist auch möglich, beispielsweise Tropfbewässerungsrohre mit sehr kleinem Durchmesser herstellen zu können.

In vorteilhafter Weise wird der Körper in Form eines Bandes im Wesentlichen kontinuierlich extrudiert, werden am einen Längsrandbereich die Dosierelemente angebracht und werden die beiden Längsseitenbereiche umgeschlagen, derart, dass die Dosierelemente des einen Längsrandbereiches unter den anderen Längsrandbereich zu liegen kommen und verschweisst werden können. Mit diesem Verfahren wird eine einfache Herstellung des Tropfbewässerungsrohres erreicht.

In vorteilhafter Weise werden die Dosierelemente durch eine Prägerolle in den einen Längsrandbereich des Bandes eingeprägt. Dadurch können die Dosierelemente in einfacher Weise kontinuierlich im extrudierten Band angebracht werden. Die hierzu benötigte Vorrichtung ist sehr einfach im Aufbau.

In vorteilhafter Weise wird der eine Längsrandbereich des Bandes beim Extrudieren mit einer Verdickung versehen, in welche dann die Dosierelemente eingeprägt werden, wodurch vermieden werden kann, dass beim Einprägen der Dosierelemente in das Band zu dünne Wandbereiche des Rohres auftreten.

Die Dosierelemente können aber auch in ein weiteres Band eingeprägt oder eingestanzt werden, welches dann mit dem einen Längsrandbereich des Bandes verbunden wird, bspw. durch Verschweissung.

Bei einer weiteren Ausführungsform des erfindungsgemässen Verfahrens wird aus einer Extrusionseinrichtung ein geschlossener rohrförmiger Körper extrudiert, in welchen die Dosierelemente eingeführt und verschweisst werden, wodurch gewährleistet ist, dass der rohrförmige Körper über den gesamten Umfang keine Schwachstellen aufweist.

In vorteilhafter Weise werden die Dosierelemente einzeln oder in Form eines Bandes kontinuierlich in den rohrförmigen Körper eingeführt, was durch eine einfach aufgebaute Vorrichtung erreicht werden kann.

In vorteilhafter Weise wird der extrudierte rohrförmige Körper durch eine Kalibriervorrichtung in eine Kühlkammer geleitet, in welcher die Ultraschallschweissung durchgeführt wird. Dadurch wird erreicht, dass der rohrförmige Körper beim Ultraschallschweissvorgang eine genügend grosse Festigkeit hat, so dass eine optimale Schweissverbindung erhalten werden kann. Zusätzlich wird aber die Restwärme des extrudierten rohrförmigen Körpers zur Ultraschallschweissung optimal ausgenützt, was sich ebenfalls auf die Qualität der Schweissverbindung auswirkt.

Eine weitere vorteilhafte Ausgestaltung des erfindungsgemässen Verfahrens zur Herstellung von Tropfbewässerungsrohren wird dadurch erreicht, dass die Energiemenge des Ultraschallschweissens zur Verkleinerung des Durchflussquerschnitts der Dosierelemente vergrössert wird. Dadurch können für verschiedene Ausflussmengen der Tropfbewässerungsrohre gleiche Dosierelemente eingesetzt werden. Die Verkleinerung des Durchflussquerschnitts ermöglicht ein Erreichen eines grösseren Dosierungsbereichs des ausströmenden Wassers.

In vorteilhafter Weise wird das mit Dosierelementen versehene Rohr durch eine Bohreinrichtung geführt, in welcher die Austrittsöffnungen in der Wandung des Rohrkörpers angebracht werden, was sich sehr einfach ausführen lässt.

Ausführungsformen des erfindungsgemässen Verfahrens werden nachfolgend anhand der beiliegenden Zeichnung beispielhaft näher erläutert.

Es zeigt
Fig. 1 in schematischer Darstellung die Herstellung eines Tropfbewässerungsrohres aus einem Körper in Form eines Bandes;
Fig. 2 in räumlicher Darstellung einen Ausschnitt eines Bandes, aus welchem das Tropfbewässerungsrohr gemäss Fig. 1 hergestellt wird;
Fig. 3 in schematischer Darstellung die Durchführung des Bandes in gefaltetem Zustand durch die Ultraschallschweisseinrichtung;
Fig. 4 in schematischer Darstellung die Durchführung des Bandes in gefaltetem Zustand durch die Ultraschallschweissvorrichtung mit erhöhter Energiezufuhr;
Fig. 5 einen Querschnitt durch ein Rohr, das gemäss den Fig. 1 bis 4 hergestellt ist;
Fig. 6 in schematischer Darstellung eine Extrusionsvorrichtung für einen rohrförmigen Körper, in welchen das Dosierelement eingeführt wird und welches die Ultraschallschweisseinrichtung durchläuft;
Fig. 7 eine Schnittdarstellung durch den rohrförmigen Körper beim Durchlauf durch die Ultraschallschweisseinrichtung gemäss Fig. 6;
Fig. 8 eine Schnittdarstellung durch den rohrförmigen Körper beim Durchlauf durch die Ultraschallschweisseinrichtung gemäss Fig. 6 mit erhöhter Energiezufuhr; und
Fig. 9 eine Querschnittdarstellung des gemäss Fig. 6 bis 8 hergestellten Tropfbewässerungsrohres.

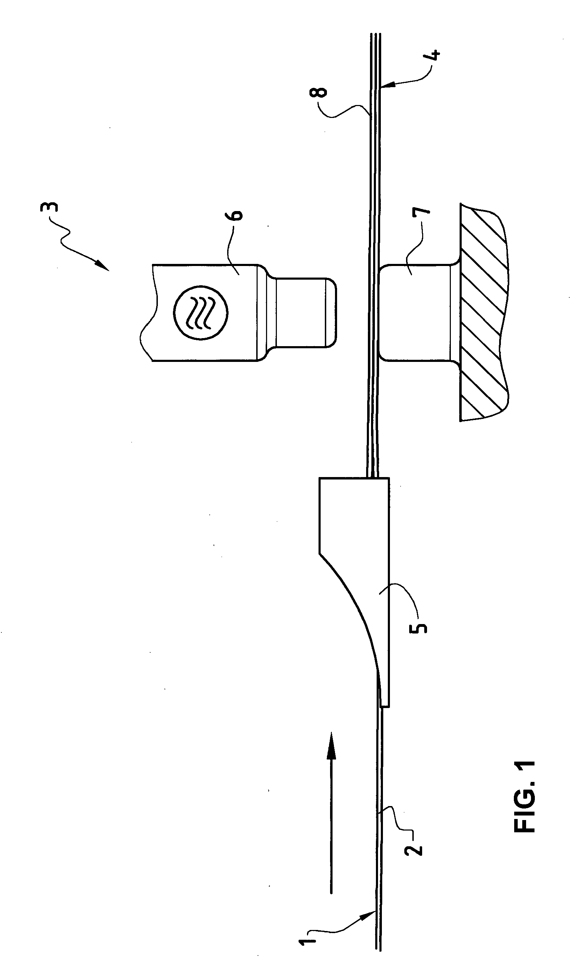

Aus Fig. 1 ist ersichtlich, wie ein extrudierter Körper 1, der die Form eines Bandes 2 hat, durch die Ultraschallschweisseinrichtung 3 hindurchgeführt wird, um ein Tropfbewässerungsrohr 4 herzustellen. Das flache Band 2 durchläuft eine Faltvorrichtung 5, in welcher die beiden Längsseitenbereiche einwärts gefaltet werden, so dass die Längsrandbereiche des Bandes 2 übereinander zu liegen kommen, wie später im Detail noch gesehen wird, und welches Band 2 dann in diesem gefalteten Zustand durch die Ultraschallschweisseinrichtung 3 hindurchgeführt wird. Diese Ultraschallschweisseinrichtung 3 besteht ihn bekannter Weise aus einer Sonotrode 6 und einem Amboss 7. Die Sonotrode 6 kann ebenfalls in bekannter, nicht dargestellter Weise auf den Amboss 7 zu und von diesem weggefahren werden. Zum Schweissen wird die Sonotrode 6 gegen den Amboss 7 bewegt und hierbei auf das gefaltete Band 2 gedrückt. In bekannter Weise wird an der Sonotrode 6 eine Schwingungsfrequenz angelegt, mittels welcher die Ultraschallschweissung erfolgt. Der so verschweisste Rohrkörper 8 kann danach weiter verarbeitet werden.

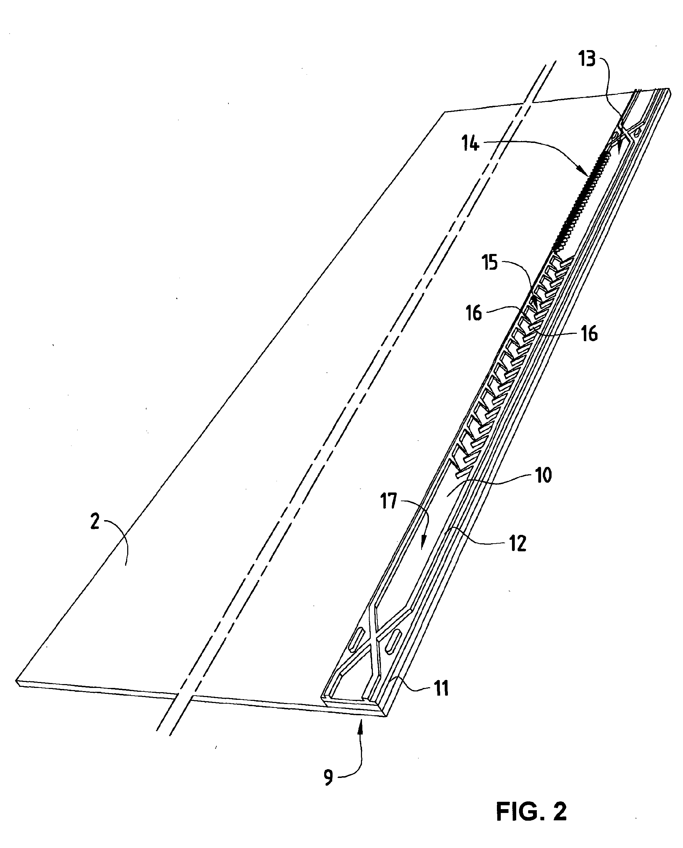

Ein Beispiel eines Bandes 2, welches der Ultraschallschweisseinrichtung 3 gemäss Figur 1 zugeführt werden kann, ist in Figur 2 dargestellt. Am einen Längsrandbereich 9 dieses Bandes sind die Dosierelemente 10 angebracht. Hierzu kann beispielsweise am einen Längsrandbereich 9 des Bandes 2 eine Verdickung extrudiert werden, in welche Verdickung dann die Dosierelemente 10 in bekannter Weise über eine Prägerolle eingeprägt werden können. Es ist auch denkbar, dass die Dosierelemente 10 in Form eines weiteren Bandes 11 hergestellt werden, welches weitere Band 11 dann im einen Längsrandbereich 9 des Bandes 2 mit diesem verbunden werden.

Jedes Dosierelement 10 ist mit einer vorstehenden Seitenwandbegrenzung 12 umschlossen. Im Eintrittsbereich 13 des Dosierelementes 10 ist diese Seitenwandbegrenzung 12 gegen das Band 2 hin mit Durchbrüchen versehen, die die Eintrittsöffnungen 14 für das Wasser bilden und als Filter wirken. Das in diesen Eintrittsbereich 13 eintretende Wasser gelangt über einen Dosierbereich 15, welcher mit Querstegen 16 versehen ist, und in welchem ein Druckabfall des Wassers erfolgt, in den Austrittsbereich 17, aus welcher das Wasser dann, wie später noch gesehen wird, austreten kann.

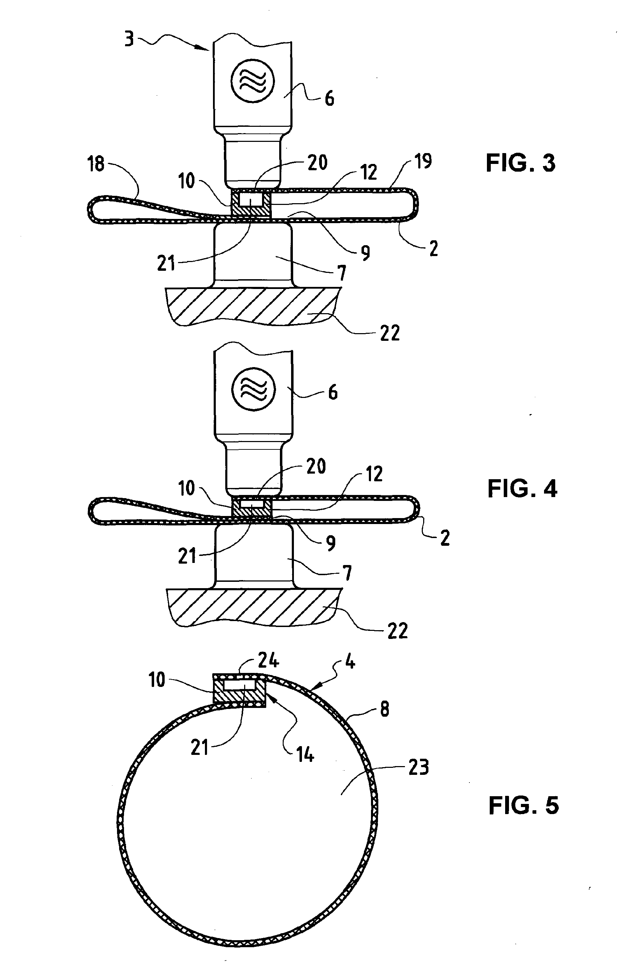

Aus Figur 3 ist ersichtlich, wie das Band 2 gemäss Figur 2 in gefaltetem Zustand durch die Ultraschallschweisseinrichtung 3 geführt wird. Die beiden Längsseitenbereiche 18 und 19 des Bandes 2 sind so eingefaltet, dass der eine Längsrandbereich 9 mit den Dosierelementen 10 unter den anderen Längsrandbereich 20 zu liegen kommt und diese beiden einander überlappen. Die Sonotrode 6 wird zum Schwingen angeregt und gegen das zu verschweissende Band 2 und somit gegen den Amboss 7 gedrückt, das zu verschweissende Band 2 wird kontinuierlich durch diese Ultraschallschweisseinrichtung 3 hindurch geführt, der andere Längsrandbereich 20 wird mit dem Dosierelement 10 verschweisst, wobei die Verschweissung mit den Seitenwandbegrenzungen 12 der Dosierelemente erfolgen und der Eintrittsbereich 13, der Dosierbereich 15 und der Austrittsbereich 17 (Figur 2) den gewünschten Hohlraum 21 bilden.

Es wurde festgestellt, dass durch diese Anordnung nur ein Verschweissen zwischen dem anderen Längsrandbereich 20 des Bandes 2 mit dem Dosierelement 10 erfolgt, nicht aber zwischen dem Band 2 und dem einen Längsrandbereich 9, was auch nicht erwünscht wäre.

Aus dieser Darstellung ist ebenfalls ersichtlich, dass der Amboss 7 in Folge des Zusammenfaltens des Bandes 2 zum entstehenden Rohrkörper in optimaler und stabiler Weise in der Ultraschallschweisseinrichtung 3 beziehungsweise deren Rahmen 22 abgestützt werden kann, wodurch eine grosse Stabilität der Schweisseinrichtung erhalten wird, was sich auf die Qualität der Schweissverbindung positiv auswirkt.

In Figur 4 ist dieselbe Konstellation dargestellt, wie sie aus Figur 3 ersichtlich ist und entsprechend beschrieben worden ist, die in die Sonotrode 6 eingespiesene Energiemenge ist aber vergrössert worden, was zur Folge hat, dass beim Schweissvorgang die Seitenwandbegrenzungen 12 der Dosierelemente 10, die mit dem anderen Längsrandbereich 20 verbunden werden, an der Verbindungsstelle mehr schmelzen, wodurch die Höhe der Seitenwandbegrenzungen 12 reduziert wird und somit der Hohlraum 21 verkleinert wird. Dadurch wird die Durchflussmenge des Wassers durch die Dosierelemente ebenfalls verkleinert, man kann dadurch mit denselben vorbereiteten Dosierelementen unterschiedliche Dosiermengen der Tropfbewässerungsrohre erhalten.

Aus Figur 5 ist ein gemäss dem vorgängig beschriebenen Herstellungsverfahren fertiggestelltes Tropfbewässerungsrohr 4 ersichtlich. Im Betrieb wird der Rohrköper 8 durch den Wasserdruck aufgepumpt, das im Innenraum 23 des Rohrkörpers 8 eingeleitete Wasser gelangt über die Eintrittsöffnungen 14 in den Hohlraum 21 der Dosierelemente 10, im Austrittsbereich ist in die Wandung des Rohrkörpers 8 eine Bohrung 24 angebracht, durch welche das Wasser dosiert und tropfweise austreten kann.

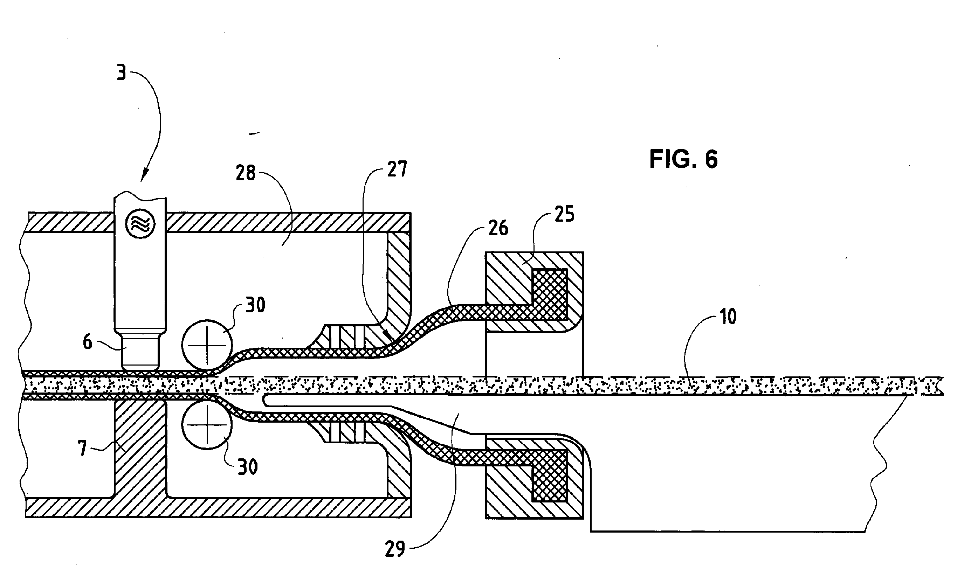

Figur 6 zeigt ein Verfahren zur Herstellung von Tropfbewässerungsrohren, bei welchem aus einer Extrudiervorrichtung 25 in bekannter Weise ein rohrförmiger Körper 26 kontinuierlich extrudiert wird. Dieser extrudierte rohrförmige Körper 26 durchläuft ebenfalls in bekannter Weise eine Kalibriervorrichtung 27, in welcher dieser rohrförmige Körper in die richtige Form gebracht wird. Aus der Kalibriervorrichtung 27 gelangt der rohrförmige Körper 26 in eine Kühlkammer 28, in welcher der rohrförmige Körper soweit abgekühlt wird, dass er eine relativ stabile Form erhält, was in bekannter nicht dargestellter Weise beispielsweise durch Eintauchen in - oder Besprühen mit Kühlwasser erfolgen kann.

Zentral in den rohrförmigen Körper 26 werden durch die Extrudiervorrichtung 25 die Dosierelemente 10 zugeführt, die in Form eines Bandes, wie dies beim vorgängig beschriebenen Herstellungsverfahren verwendet worden ist, oder als einzelne Dosierelemente vorliegen. In bekannter Weise gelangen diese über eine Führungsschiene 29 in den rohrförmigen Körper 26. Der rohrförmige Körper 26 wird dann flachgedrückt, was beispielsweise durch zwei Walzen 30 erfolgen kann und wird in diesem flachgedrückten Zustand mit den eingeschlossenen Dosierelementen in die Ultraschallschweisseinrichtung 3 geleitet, die auch innerhalb der Kühlkammer 28 angeordnet ist. Auch hierbei wird der flachgepresste rohrförmige Körper 26 zwischen der Sonotrode 6 und dem Amboss 7 dieser Ultraschallschweisseinrichtung durchgeführt und mit den Dosierelementen 10 verschweisst.

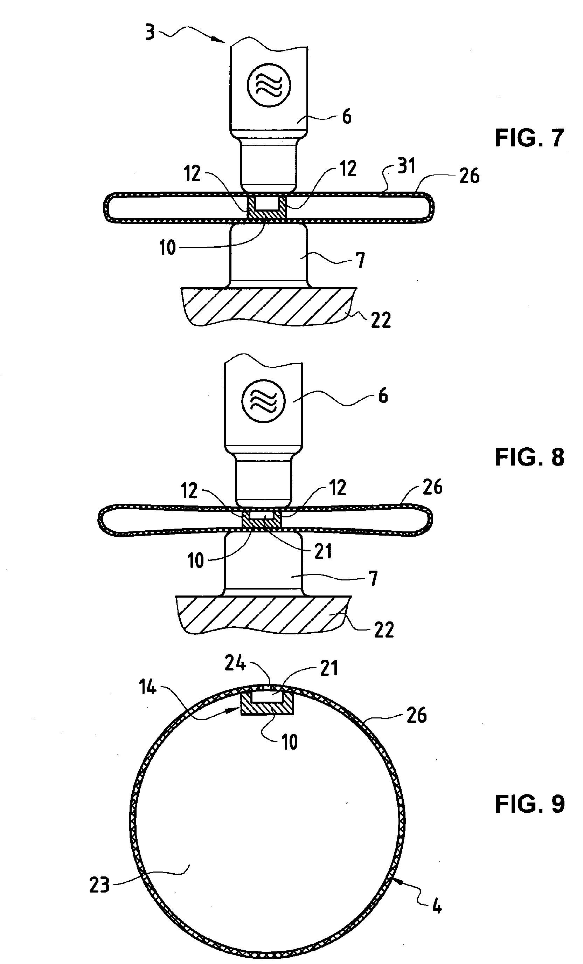

Wie aus Figur 7 ersichtlich ist, wird der zusammengedrückte rohrförmige Körper 26 mit den darin eingeschlossenen Dosierelementen 10 zwischen der Sonotrode 6 und den Amboss 7 der

Ultraschallschweisseinrichtung 3 hindurch geleitet, die Sonotrode 6 wird auch hier zum Schwingen angeregt, wodurch eine Verschweissung der Seitenwandbegrenzungen 12 der Dosierelemente 10 mit der Wandung 31 des rohrförmigen Körpers 26 erfolgt. Auch hier wird nur in diesem Bereich eine Verschweissung erhalten, das Dosierelement 10 wird auch hier nicht mit der Wandung 31 des rohrförmigen Körpers 26 verschweisst, die auf dem Amboss 7 aufliegt.

Auch hier kann der Amboss 7 in optimaler Weise stabil auf dem Rahmen 22 der Ultraschallschweisseinrichtung 3 abgestützt werden, wodurch man stabile Verhältnisse erreicht, was sich auf die Schweissqualität positiv auswirkt.

Wie aus Figur 8 ersichtlich ist, kann auch hier, entsprechend zu dem zu Figur 4 beschriebenen Vorgang, die Energiezufuhr auf die Sonotrode 6 erhöht werden, wodurch auch hier die oberen Teile der Seitenwandbegrenzungen 12 mehr schmelzen, sodass auch hier der Hohlraum 21 der Dosierelemente 10 verkleinert wird und dadurch die Wasserdurchflussmenge durch die Dosierelemente 10 geringer wird.

Figur 9 zeigt im Schnitt das gemäss dem obigen Herstellungsverfahren erhaltene Tropfbewässerungsrohr in Betrieb. Durch das im Innenraum 23 dieses Tropfbewässerungsrohres 4 geführte Wasser wird der rohrförmige Körper 26 aufgepumpt, das Wasser gelangt über die Eintrittsöffnungen 14 in den Hohlraum 21 der Dosierelemente 10, und tritt durch eine im Bereich der Dosierelemente 10 angebrachten Bohrung 24 in dosierter Form aus dem Tropfbewässerungsrohr 4 aus.

Bei den vorliegend beschriebenen Verfahren wird der bestehende oder zu bildende Rohrkörper mit den darin eingesetzten Dosierelementen kontinuierlich durch die Ultraschallschweisseinrichtung hindurchgeführt. Hierbei können Geschwindigkeiten gefahren werden, die im Bereich von bis zu 400 m/min liegen. Hierbei ist es auch denkbar, dass an Stelle der im Wesentlichen eine prismatische Form aufweisende Sonotrode in bekannter Weise eine rollenförmige Sonotrode eingesetzt wird.

Als Materialien für den Rohrkörper und die Dosierelemente kann beispielsweise Polyethylen verwendet werden, selbstverständlich sind auch andere geeignete thermoplastische Kunstoffe verwendbar.

Gute Schweissresultate werden dann erhalten, wenn die Ultraschallschweisseinrichtung mit einer Frequenz von etwa 30 Kilohertz arbeitet, wobei die Wellenlänge etwa 40 µm beträgt, und wobei der Anpressdruck der Sonotrode etwa 40 N/cm² beträgt.

Die Dosierelemente können in bekannter und vielfältiger Weise ausgestaltet werden, angepasst an die Anforderungen und Einsatzgebiete. Die Länge der Dosierelemente oder der Abstand der Dosierelemente voneinander lässt sich auch praktisch beliebig ausgestalten, beispielsweise kann eine Prägerolle entsprechend ausgebildet sein und einen entsprechend angepassten Durchmesser aufweisen.

Bei den gemäss diesen beschriebenen Verfahren hergestellten Tropfbewässerungsrohren wird die Austrittsöffnung in bekannter Weise durch eine Bohreinrichtung hergestellt, die beispielsweise in die Produktionslinie integriert ist.

Mit den hier beschriebenen erfindungsgemässen Verfahren zur Herstellung von Tropfbewässerungsrohren wird eine optimale Verbindung zwischen den Rohrkörpern und den Dosierelementen erreicht, insbesondere auch bei hohen Produktionsgeschwindigkeiten, was sich auf eine optimale Qualität dieser Tropfbewässerungsrohre auswirkt. Mit diesen Verfahren und Vorrichtungen können Tropfbewässerungsrohre in praktisch beliebigen Dimensionen hergestellt werden, diese können kleine Durchmesser aber auch grosse Durchmesser aufweisen, diese Tropfbewässerungsrohre können dünnwandig sein, sie können auch eine grössere Wandstärke aufweisen, je nachdem, unter welchen Bedingungen diese Tropfbewässerungsrohre zum Einsatz kommen.

## Patentansprüche

1. Verfahren zur Herstellung von Tropfbewässerungsrohren, bei welchem ein Körper (1, 26), aus welchem das Rohr (4) gebildet wird, extrudiert wird und im extrudierten Körper (1, 26) Dosierelemente (10) angebracht werden, welche mit dem Körper (1, 26) durch Ultraschall-Schweissung verbunden werden, bei welchen Tropfbewässerungsrohren das Wasser aus deren Innenseite (23) über Eintrittsöffnungen (14) in die Dosierelemente (10) gelangt, diese durchläuft und über Austrittsöffnungen (24) dosiert aus den Tropfbewässerungsrohren austritt, **dadurch gekennzeichnet, dass** der Körper (1, 26) zu einem Rohrkörper gebildet wird, welcher flach gepresst wird und die Dosierelemente (10) in einen mittleren Bereich im Innern dieses flach gepressten Rohrkörpers zu liegen kommen, dass der flache Rohrkörper zwischen einer Sonotrode (6) und einem Amboss (7) einer UltraschallSchweisseinrichtung (3) hindurchgeführt wird und die Dosierelemente (10) mit der Wandung des Rohrkörpers verschweisst werden.

2. Verfahren nach Anspruch 1, **dadurch gekennzeichnet, dass** der Körper in Form eines Bandes (2) im Wesentlichen kontinuierlich extrudiert wird, dass am einen Längsrandbereich (9) die Dosierelemente (10) angebracht werden, dass beide Längsseitenbereiche (18, 19) umgeschlagen werden, derart, dass die Dosierelemente (10) des einen Längsrandbereiches (9) unter den anderen Längsrandbereich (20) zu liegen kommen und verschweisst werden.

3. Verfahren nach Anspruch 2, **dadurch gekennzeichnet, dass** die Dosierelemente (10) durch eine Prägerolle in den einen Längsrandbereich (9) des Bandes (2) eingeprägt werden.

4. Verfahren nach Anspruch 3, **dadurch gekennzeichnet, dass** der eine Längsrandbereich (9) des Bandes beim Extrudieren mit einer Verdickung versehen wird, in welche dann die Dosierelemente (10) eingeprägt werden.

5. Verfahren nach Anspruch 2, **dadurch gekennzeichnet, dass** die Dosierelemente (10) in ein weiteres Band (11) eingeprägt oder eingestanzt werden, welches mit dem einen Längsrandbereich (9) des Bandes (10) verbunden wird.

6. Verfahren nach Anspruch 1, **dadurch gekennzeichnet, dass** aus einer Extrusionseinrichtung (25) ein geschlossener rohrförmiger Körper (26) extrudiert wird, in welchen die Dosierelemente (10) eingeführt und verschweisst werden.

7. Verfahren nach Anspruch 6, **dadurch gekennzeichnet, dass** die Dosierelemente (10) einzeln oder in Form eines Bandes kontinuierlich in den rohrförmigen Körper (26) eingeführt werden.

8. Verfahren nach Anspruch 7, **dadurch gekennzeichnet, dass** der extrudierte rohrförmige Körper (26) durch eine Kalibriervorrichtung (27) in eine Kühlkammer (28) geleitet wird, in welcher die Ultraschallschweissung durchgeführt wird.

9. Verfahren nach einem der Ansprüche 1 bis 8, **dadurch gekennzeichnet, dass** die Energiemenge des Ultraschallschweissens zur Verkleinerung des Durchflussquerschnitts der Dosierelemente (10) vergrössert wird.

10. Verfahren nach einem der Ansprüche 1 bis 9, **dadurch gekennzeichnet, dass** das mit Dosierelementen (10) versehene Rohr durch eine Bohreinrichtung geführt wird, in welcher die Austrittsöffnungen (24) in der Wandung des Rohrkörpers (8, 26) angebracht werden.

## Claims

1. Method for producing drip irrigation tubes, in which a body (1, 26), from which the tube (4) is formed, is extruded and metering elements (10) are attached in the extruded body (1, 26), which metering elements are connected to the body (1, 26) by means of ultrasonic welding, in which drip irrigation tubes, the water enters the metering elements (10) from the inside (23) of the drip irrigation tubes through inlet openings (14), flows through the metering elements, and exits the drip irrigation tubes through outlet openings (24) in a metered manner, **characterised in that** the body (1, 26) is formed into a tube body, which is flattened, and the metering elements (10) come to be situated in a central region inside this flattened tube body, the flat tube body is fed between a sonotrode (6) and an anvil (7) of an ultrasonic welding device (3), and the metering elements (10) are welded to the walling of the tube body.

2. Method according to claim 1, **characterised in that** the body is extruded substantially continuously in the form of a strip (2), the metering elements (10) are attached in a longitudinal edge region (9), both longitudinal edge regions (18, 19) are turned over in such a way that the metering elements (10) of the one longitudinal edge region (9) come to be situated under the other longitudinal edge region (20), and are welded.

3. Method according to claim 2, **characterised in that** the metering elements (10) are impressed into the one longitudinal edge region (9) of the strip (2) by a stamping roller.

4. Method according to claim 3, **characterised in that** the one longitudinal edge region (9) of the strip is provided during extrusion with a thickening into which the metering elements (10) are then impressed.

5. Method according to claim 2, **characterised in that** the metering elements (10) are impressed or stamped into a further strip (11), which is connected to the one longitudinal edge region (9) of the strip (10).

6. Method according to claim 1, **characterised in that** a closed tubular body (26) is extruded from an extrusion device (25), in which body the metering elements (10) are inserted and welded.

7. Method according to claim 6, **characterised in that** the metering elements (10) are continuously inserted into the tubular body (26) individually or in the form of a strip.

8. Method according to claim 7, **characterised in that** the extruded tubular body (26) is led through a sizing device (27) into a cooling chamber (28), in which the ultrasonic welding is carried out.

9. Method according to one of the claims 1 to 8, **characterised in that** in order to reduce the discharge cross-sectional area of the metering elements (10), the amount of energy of the ultrasonic welding is increased.

10. Method according to one of the claims 1 to 9, **characterised in that** the tube provided with metering elements (10) is led through a boring device in which the outlet openings (24) are made in the walling of the tube body (8, 26).

## Revendications

1. Procédé de fabrication de tuyaux d'irrigation en goutte à goutte, dans lequel un corps (1, 26), à partir duquel le tuyau est formé, est extrudé et des éléments de dosage (10) sont fixés dans le corps extrudé (1, 26), les éléments de dosage étant liés au corps (1, 26) au moyen du soudage ultrasonique, dans lesquels tuyaux d'irrigation en goutte à goutte, l'eau entre dans les éléments de dosage (10) depuis leur partie intérieure (23) par des ouvertures d'entrée (14), circule à travers les éléments de dosage et sort des tuyaux d'irrigation en goutte à goutte par des ouvertures de sortie (24) de façon dosée, **caractérisé en ce que** le corps (1, 26) est formé dans un corps de tuyau, qui est aplati, et les éléments de mesure (10) viennent se placer dans une zone centrale à l'intérieur de ce corps de tuyau aplati, que le corps de tuyau plat passe entre une sonotrode (6) et une enclume (7) d'un dispositif de soudage ultrasonique (3), et que les éléments de dosage (10) sont soudés à la paroi du corps de tuyau.

2. Procédé selon la revendication 1, **caractérisé en ce que** le corps est extrudé substantiellement continuellement en forme de bande (2), que les éléments de dosage (10) sont liés dans une zone de bord longitudinale (9), que les deux zones de bord longitudinales (18, 19) sont tournées de telle manière que les éléments de dosage (10) de la zone de bord longitudinale (9) viennent se placer sous l'autre zone de bord longitudinale (20) et sont soudés.

3. Procédé selon la revendication 3, **caractérisé en ce que** les éléments de dosage (10) sont imprimés dans la zone de bord longitudinale (9) de la bande (2) par un rouleau de timbrage.

4. Procédé selon la revendication 3, **caractérisé en ce que** la zone de bord longitudinale (9) de la bande est munie pendant l'extrusion d'un épaississement dans lequel les éléments de dosage (10) sont ensuite imprimés.

5. Procédé selon la revendication 2, **caractérisé en ce que** les éléments de dosage (10) sont imprimés ou timbrés sur une autre bande (11), qui est liée à la zone de bord longitudinale (9) de la bande (10).

6. Procédé selon la revendication 1, **caractérisé en ce qu'**un corps tubulaire fermé (26) est extrudé d'un dispositif d'extrusion (25), dans lequel corps les éléments de dosage (10) sont insérés et soudés.

7. Procédé selon la revendication 6, **caractérisé en ce que** les éléments de dosage (10) sont insérés continuellement dans le corps tubulaire (26) de manière individuelle ou dans la forme d'une bande.

8. Procédé selon la revendication 7, **caractérisé en ce que** le corps tubulaire extrudé (26) est emmené à travers un dispositif de calibrage (27) dans une chambre de refroidissement (28), dans laquelle le soudage ultrasonique est effectué.

9. Procédé selon l'une quelconque des revendications 1 à 8, **caractérisé en ce que** pour réduire la zone en coupe de décharge des éléments de dosage (10), la quantité d'énergie du soudage ultrasonique est augmentée.

10. Procédé selon l'une quelconque des revendications 1 à 9, **caractérisé en ce que** le tuyau muni des éléments de dosage (10) est emmené à travers un dispositif de perçage dans lequel les ouvertures de sortie (24) sont faites dans la paroi du corps de tuyau (8, 26).
